# EUROPÄISCHE PATENTSCHRIFT

(11) **EP 0 668 647 B1**
(45) Veröffentlichungstag und Bekanntmachung des Hinweises auf die Patenterteilung: **12.08.1998**
(21) Anmeldenummer: 95100135.3
(22) Anmeldetag: 05.01.1995
(51) Int. Cl.: H02H 7/122, H05B 39/04

(54) **Elektronischer Transformator**
Electronic transformer
Transformateur électronique

(30) Priorität: 21.02.1994 DE 4405485; 25.04.1994 DE 4414362
(43) Veröffentlichungstag der Anmeldung: 23.08.1995
(73) Patentinhaber: Tridonic Bauelemente GmbH, 6850 Dornbirn (AT)
(72) Erfinder: Spechtenhauser, Reinhard, A-6845 Hohenems (AT)
(74) Vertreter: Schmidt-Evers, Jürgen, Dipl.-Ing.

(56) Entgegenhaltungen:
- EP-A- 0 466 031
- DE-A- 3 841 186
- DE-A- 4 201 744

## Beschreibung

Die vorliegende Erfindung betrifft einen elektronischen Transformator gemäß Oberbegriff des Anspruchs 1 zur Wechselstromversorgung einer Last, insbesondere zum Betreiben einer Niedervolt-Lampe.

Aus der EP 466 031 A1 ist ein elektronischer Transformator zum Betreiben von Niedervolt-Lampen bekannt. Eine aus einem NTC-Widerstand und einer Zenerdiode bestehende Parallelschaltung bildet darin ein in Serie mit den Schaltelementen des Wechselrichters liegendes Meßglied, das zur Messung der Temperatur des Trafos bzw. zur Messung des Laststroms dient. Das Temperaturmeßglied gibt dabei ein der Temperatur proportionales Meßsignal an eine Schutzschaltung ab. Die Zenerdiode soll verhindern, daß der Laststrom über einen vorbestimmbaren Maximalwert ansteigt. Die aus einem Thyristor bestehende Schutzschaltung legt nach Eingang eines vom Meßglied abgegebenen Fehlersignals das Triggerelement auf Bezugspotential, wodurch das Schwingen des Wechselrichters unterbrochen wird.

Der Erfindung liegt die Aufgabe zugrunde, das Abschaltverhalten des Wechselrichters im Fehlerfall zu verbessern.

Diese Aufgabe wird durch die kennzeichnenden Merkmale des Anspruchs 1 gelöst, d. h. dadurch, daß das Meßglied nicht in Reihe zum Wechselrichter liegt, sondern daß das Meßsignal transformatorisch über eine Sekundärwicklung des im Lastkreis liegenden Rückkopplungsübertragers dem Meßglied zugeführt wird, wodurch eine Verstärkung des Fehlersignals bei entsprechender Wicklungsübersetzung möglich ist. Dabei sind keine zusätzlichen Bauteile notwendig.

Hinsichtlich des eingangs beschriebenen bekannten elektronischen Transformators ist ferner festzustellen, daß der Benutzer keine differenzierte Aussage darüber machen kann, welcher Fehlerfall vorliegt. Ob der Laststrom zu groß geworden ist oder die Temperatur überschritten wurde, laßt sich an der Reaktion der Schutzschaltung, die in beiden Fällen die Lampen abschaltet, nicht ablesen. Bei der vorgenannten Anordnung ist darüber hinaus auch deshalb keine exakte Trennung zwischen der Abschaltung infolge eines Kurzschlusses und der Abschaltung infolge einer Übertemperatur möglich, weil sowohl der NTC-Widerstand als auch die Zenerdiode über einen gemeinsamen Widerstand am Bezugspotential liegen. Das bedeutet also, daß eine unabhängige Einstellung der Abschaltkriterien für beide Fehlerfälle nicht möglich ist.

Der vorstehend beschriebene Nachteil des bekannten elektronischen Transformators wird durch die kennzeichnenden Merkmale des Anspruchs 3 vermieden, wodurch für den Benutzer erkennbar wird, welcher Fehlerfall vorliegt.

Eine andere Weiterbildung des elektronischen Transformators gemäß Anspruch 4 bietet den Vorteil, daß aufgrund der Enkoppelungsdioden eine exakte Trennung zwischen den beiden Meßzweigen für die Fehlerfälle "Überlast" und "Übertemperatur" möglich ist. Entsprechend können auch die Ansprechgrenzen der jeweiligen Meßglieder der beiden Meßzweige unabhängig voneinander eingestellt werden.

Zusätzliche vorteilhafte Ausgestaltungen sind den weiteren Unteransprüchen zu entnehmen.

Weitere Vorteile der vorliegenden Erfindung ergeben sich aus der Beschreibung.

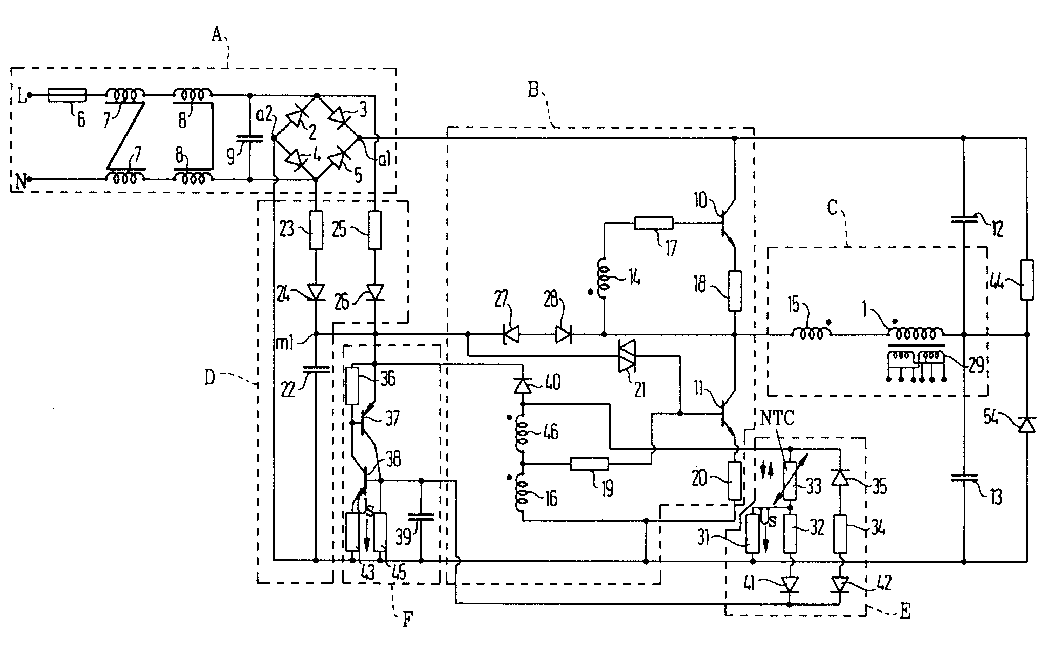

Die Erfindung wird nachfolgend anhand eines Ausführungsbeispiels näher erläutert. Dabei zeigt die einzige Figur ein Schaltungsdiagramm des Ausführungsbeispiels der Erfindung.

Die einzige Figur zeigt beispielhaft eine Schaltung zur Ansteuerung eines Transformators 1, der in der Zeichnung nicht dargestellte Niedervoltlampen, bspw.
Niedervolt-Halogenlampen, mit einer Wechselspannung von üblicherweise 12 Volt speist. Zur besseren Erläuterung der in der einzigen Figur gezeigten Schaltung ist diese in mehrere funktionale Blöcke A-F aufgeteilt.

Block A zeigt eine Gleichrichterschaltung mit vier Gleichrichterdioden 2-5, die als Brückengleichrichter geschaltet sind. Gespeist werden diese Dioden 2-5 von einer am Eingang der Gleichrichterschaltung anliegenden Netzwechselspannung. Zum Schutz der Schaltung ist in einer Eingangsleitung eine Sicherung 6 vorgesehen, die beim Überschreiten eines maximal zulässigen Stroms abschaltet. Im Eingangskreis befinden sich darüber hinaus Drosseln bzw. Spulen 7,8 zur Funkentstörung, die aufgrund bestimmter Richtlinien und Normen notwendig ist. Vorzugsweise werden in jeder Eingangsleitung des Gleichrichters Induktivitäten geschaltet, die wie in der einzigen Figur gezeigt, in einem Fall gegensinnig 7 und im anderen Fall gleichsinnig 8 gekoppelt sind. Zur Unterdrückung von hochfrequenten Rückstrahlungen ins Versorgungsnetz sind die beiden Eingangsleitungen über einen Kondensator 9 miteinander verbunden.

Die zwischen den Ausgängen a1, a2 des Gleichrichters A liegende gleichgerichtete Wechselspannung wird einem Wechselrichter B zugeführt, der in dem beschriebenen Ausführungsbeispiel als selbstschwingender Wechselrichter ausgeführt ist.
Selbstverständlich können auch zwangsgesteuerte Wechselrichter eingesetzt werden, die jedoch aufgrund einer dadurch bedingten Ansteuerungsschaltung einen komplizierten und teuren Aufbau erfordern.

Der Aufbau und die Funktionsweise eines selbstschwingenden Wechselrichters ist dem Fachmann allgemein bekannt. Aufgrund dessen soll auf eine detaillierte Beschreibung verzichtet werden.

Zwischen den beiden Eingangsleitungen des Wechselrichters liegt eine aus zwei steuerbaren Schaltern 10, 11 gebildete Serienschaltung, wobei vorzugsweise bipolare Transistoren aufgrund ihrer gegenüber FETs geringeren Ansprechschwelle verwendet werden. Ebenfalls zwischen den Eingängen liegt eine Serienschaltung aus zwei Kondensatoren 12, 13, wobei die beiden Serienschaltungen 10, 11 bzw. 12, 13 jeweils einen Brückenzweig bilden, die durch eine Last C miteinander verbunden sind. Parallel zum Kondensator 12 liegt ein Widerstand 44, parallel zum Kondensator 13 eine in Sperrichtung angeordnete Diode 54.

Üblicherweise sind parallel zu den beiden Kondensatoren 12, 13 desweiteren Freilaufdioden in bekannter Weise angeordnet, die in der einzigen Figur der besseren Übersicht wegen jedoch weggelassen wurden. Die Diode 54 und der Widerstand 44 sorgen während der Freilaufphase der Last dafür, daß der aus den Induktivitäten 15, 1, 29 und Kapazitäten 12, 13 gebildete Resonanzkreis während dieser Phase bedämpft wird.

Der obere Transistor 10 wird über eine Sekundärwicklung 14 eines Rückkopplungsübertragers angesteuert, wobei die Sekundärwicklung 14 zwischen der Basis und dem Emitter des Transistors 10 liegt. Die Primärwicklung 15 des Rückkopplungsübertragers liegt im Lastkreis C. Die Ansteuerung des unteren Transistors 11 weist einen der Ansteuerung des oberen Transistors entsprechenden Aufbau auf, wobei über eine zweite Sekundärwicklung 16 eine Ansteuerung des Transistors 11 erfolgt. Um ein alternierendes Schalten der beiden Transistoren 10, 11 zu ermöglichen, ist die Sekundärwicklung 14 des oberen Transistors 10 gegensinnig zu derjenigen des unteren Transistors 11 angeordnet, wobei die beiden Wicklungen 14, 16 gleich groß sind. Zur Einstellung der Arbeitspunkte der beiden Transistoren 10, 11 sind jeweils ein Widerstand im Basiskreis 17 bzw. 19 und ein Widerstand im Emitterkreis 18 bzw. 20 vorgesehen.

An der Basis des unteren Transistors 11 greift ein Triggerelement 21, vorzugsweise ein DIAC, an, das den Wechselrichter mit der doppelten Netzfrequenz zum hochfrequenten Schwingen mittels eines Triggersignals anregt. Normalerweise ist ein solches Triggern von selbstschwingenden Wechselrichtern nicht notwendig, da diese meist, wie bei Vorschaltgeräten für Gasentladungslampen, mit einer konstanten Gleichspannung versorgt werden, beispielsweise über einen Hochsetzsteller. Im vorliegenden Fall bekommt der Wechselrichter jedoch aus Kostengründen eine gleichgerichtete ungeglättete Wechselspannung zugeführt, die das selbständige Schwingen nach jeder Halbwelle unterbrechen würde.

Die Energie zum Triggern bekommt das Triggerelement 21 von einem Kondensator 22, der über einen am Netz angeschlossenen und aus jeweils einem Widerstand und einer Diode 23, 24 bzw. 25, 26 bestehenden Spannungsteiler aufgeladen wird. Die beiden Dioden 24, 26 sind derart angeordnet, daß die mit ihnen verbundenen Widerstände 23 bzw. 26 abwechselnd stromdurchflossen sind (Block D).

Am Spannungsteilermittelabgriff m1 ist ebenfalls das eine Ende einer aus einer Zenerdiode 27 und einer Diode 28 gebildeten Reihenschaltung angeschlossen, wobei die Anoden der beiden Bauelemente miteinander verbunden sind. Das andere Ende der Reihenschaltung, nämlich die Kathode der Diode 28, liegt am Kollektor des unteren Transistors 11.

Zwischen dem Mittelabgriff m1 und dem Basiskreis des unteren Transistors 11, insbesondere zwischen Sekundärwicklung 16 und Widerstand 19, liegt eine Reihenschaltung aus einer weiteren Sekundärwicklung 46 des Rückkopplungsübertragers und einer Diode 40, deren Kathode mit dem Mittelabgriff m1 verbunden ist.

Wie bereits angedeutet, verbindet der Lastkreis C die beiden Brückenzweige 10, 11 bzw. 12, 13. Im Lastkreis C selbst liegen die Primärwicklung 15 des Rückkopplungsübertragers und ein Transformator 1 in Reihe. Der Transformator 1 versorgt über Sekundärwicklungen 29 die Niedervoltlampen mit der benötigten Spannung.

Block E bildet ein Überlast- und Temperaturmeßglied, deren eines Ende zwischen Sekundärwicklung 46 und Diode 40 des Wechselrichters C angreift und deren anderes Ende mit dem am Ausgang des Gleichrichters a2 anliegenden Bezugspotential verbunden ist. Das Meßglied umfaßt eine Spannungsteilerschaltung aus einem Temperaturmeßglied 33, vorzugsweise einem NTC-Widerstand, und einem Widerstand 31. Die an diesem Widerstand 31 abfallende Spannung Uₛ wird über eine Reihenschaltung aus einem Widerstand 32 und einer Diode 41 einer Schutzschaltng F zugeführt, auf die später detailliert eingegangen wird. Parallel zu der Reihenschaltung aus Temperaturmeßglied 33, das mit den Transistoren 10, 11 des Wechselrichters thermisch gekoppelt ist, Widerstand 32 und Diode 41 liegt eine weitere als Überlastmeßglied dienende Reihenschaltung aus einer Zenerdiode 35, einem Widerstand 34 und einer Diode 42. Die beiden Dioden 41, 42 werden zur Entkopplung der beiden Meßglieder verwendet, die über eine gemeinsame Signalleitung mit der Schutzschaltung F verbunden sind.

Die zwischen dem Mittelabgriff m1 und dem Bezugspotential a2 liegende Schutzschaltung F umfaßt eine Reihenschaltung aus zwei komplementären Transistoren 37, 38, die so geschaltet sind, daß der Emitter des PNP-Transistors 37 am Mittelabgriff m1 liegt, der Kollektor dieses Transistors 37 zur Basis des zweiten NPN-Transistors 38 führt, dessen Kollektor wiederum mit der Basis des ersten Transistors 37 verbunden ist. Der Emitter des zweiten Transistors 38 liegt über einen Widerstand 43 auf Bezugspotential. Zwischen Basis des zweiten Transistors 38 und Bezugspotential liegt ein zum Schutz vorgesehener Kondensator 39.

Eine Einstellung der Arbeitspunkte der Transistoren 37, 38, insbesondere zur Verhinderung des Temperaturdrifts, kann über die Widerstände 36, 43 und 45 erreicht werden, wobei Widerstand 36 zwischen Basis und Emitter des ersten Transistors 37 und Widerstand 45 parallel zum Kondensator 39 angeordnet ist.

Das von dem Überlast- und Temperaturmeßglied E gelieferte Signal wird der Basis des zweiten Transistors 38 zugeführt.

Im folgenden wird nun auf die Funktionsweise der einzelnen Blöcke eingegangen, wobei jedoch auf die Beschreibung von dem Fachmann bekannten Tatsachen, wie Funktion des Gleichrichters oder Wechselrichers verzichtet wird.

Wie bereits erwähnt, muß der selbstschwingende Wechselrichter B getriggert werden, da aufgrund der dem Wechselrichter zugeführten gleichgerichteten Wechselspannung ein selbständiges Schwingen nur während einer Netzhalbwelle erfolgen würde. Um auf eine Triggerung verzichten zu können, müßte man dem Wechselrichter eine möglichst glatte Gleichspannung zur Verfügung stellen. Dazu wären Glättungsglieder am Ausgang des Gleichrichters, wie beispielsweise Elektrolytkondensatoren, erforderlich, die jedoch die Kurvenform des aufgenommenen Stroms verzerren würden. Die Folge davon wären ungünstige Rückstrahlungen ins Netz, die nur durch aufwendige Filterschaltungen zu vermeiden wären. Man ist also bestrebt, die Stromaufnahmekurve möglichst sinusförmig zu halten.

Die Triggerung erfolgt durch das Triggerelement 21, vorzugsweise ein kostengünstiges DIAC, das bei Überschreiten der elementspezifischen Triggerspannung, üblicherweise etwa 32 V, ein Spannungssignal an die Basis des unteren Transistors 11 liefert. Die Triggersignale werden mit doppelter Netzfrequenz zur Verfügung gestellt. Die notwendige Energie bezieht das Triggerelement 21 vom Kondensator 22, der über den Spannungsteiler 23-26 aufgeladen wird.

Eine Maßnahme zur Vermeidung von unkontrolliertem Triggern ist in Form der Diode 28 getroffen. Der Kondensator 22 wird regelmäßig, und zwar mit jeder Schwingung des Wechselrichters, über diese Diode 28 und den unteren Transistor 11 entladen. Die Zenerdiode 27 sorgt jedoch dafür, daß die Spannung am Kondensator 22 nicht auf Null sondern nur bis zur Zenerspannung sinkt. Das hat den Vorteil, daß nicht ständig der Entladestrom des Kondensators 22 über den Transistor 11 fließt, womit eine Verringerung der zusätzlichen Belastung des Transistors 11 erzielt werden kann.

Das Überlast- und Temperaturmeßglied E dient zum Messen des Lampenstroms und der Temperatur der Transistoren des Wechselrichters. Die Schutzschaltung F, die das Signal des Meßglieds E auswertet, soll die Wechselrichterschaltung B vor zu hohen Strömen bzw. zu hohen Temperaturen schützen, die zum einen aufgrund des besonderen Verhaltens von Niedervoltlampen bzw. allgemein von Lampen mit Glühwendeln kurz nach dem Einschalten auftreten können und zum anderen bspw. durch Benutzung falscher Leuchtmittel (bspw. 100 Watt statt 60 Watt Lampe) oder Kurzschlüsse verursacht werden.

Aufgrund der besonderen Ausgestaltung des Meßglieds E sind zwei voneinander unabhängige Messungen möglich.

Im Falle eines Kurzschlusses- bzw. einer Überspannung steigt der durch die Primärwicklung 15 fließende Strom und damit auch die an der Sekundärwicklung 46 abfallende Spannung stark an. Diese Spannung wird der Zenerdiode 35 zugeführt, die nach Erreichen der Zenerspannung durchbricht und an die Schutzschaltung F ein Fehlersignal mit einer Signalspannung von etwa 1 V abgibt.

Mit Hilfe der transformatorischen Übertragung des Lampenstrom-Meßsignals ist durch entsprechende Wahl der Wicklungszahl der Sekundärwicklung 46 eine Verstärkung ohne zusätzliche Bauteile möglich. Damit läßt sich die Empfindlichkeit des Meßglieds auf einfache Weise steigern bzw. die Überwachung störungsunempfindlicher durchführen, nachdem statt der bisher üblichen Zenerdiode 35 mit einer Zenerspannung von 2,7 V eine Zenerdiode mit 22V eingesetzt werden kann.

Die Meßsignalspannung von etwa 1 V gelangt an die Basis des Transistors 38 der Schutzschaltung F. Da die Transistorschaltspannung, von bspw. 0,7 V, deutlich überschritten ist, schaltet dieser Transistor 38 sofort (vergleichbar mit einem Thyristor) durch, d.h. er leitet. Die Basis des oberen Transistors 37 ist nun gegenüber dessen Emitter negativ vorgespannt, wodurch auch dieser Transistor 37 leitet. Die Folge ist, daß sich der Kondensator 22 über die Transistoren entlädt und ein Neutriggern des Wechselrichters verhindert. Darüber hinaus liegt auch die Basis des unteren Transistors 11 über die Sekundärwicklung 46, die Diode 40 und die Transistoren 37, 38 am Bezugspotential, wodurch die Schwingung des Wechselrichters unterbrochen wird. Nachdem es sich bei der dem Meßglied E zugeführten Spannung, die an der Sekundärwicklung 46 abgegriffen wird, um eine Wechselspannung handelt, findet der zuvor beschriebene Vorgang nur während einer positiven Halbwelle statt. Zu Beginn der negativen Halbwelle werden die Transistoren 37, 38, wie bei einer Thyristorschaltung, gesperrt, da die Diode 41 das Meßsignal nicht durchlaßt. Erst bei der nächsten positiven Halbwelle werden die Transistoren wieder leitend, sofern der Fehler in der Zwischenzeit nicht behoben wurde.

Die Unterbrechung, und damit auch die Versorgung der Lampen, erfolgt solange, bis der gemessene Strom wieder unter den vorbestimmten Grenzwert sinkt und der Wechselrichter wieder neu getriggert wird.

Im Gegensatz zur Überspannungs-Messung reagiert die Schutzschaltung F bei Überschreiten einer bestimmten Temperatur mit einem Verringern der an die Lampen abgegebenen Leistung, wodurch diese dunkler und mit ca. 5 bis 30% der Gesamtleistung weiter betrieben werden.

Steigt die Temperatur eines der Transistoren des Wechselrichters, so verringert sich langsam der Widerstandswert des NTC-Widerstands 33, womit sich die am Widerstand 31 abfallende der Schutzschaltung F zugeführte Meßsignalspannung Uₛ langsam erhöht. Gleichzeitig erwärmen sich das gesamte Gerät und damit auch die Transistoren 37, 38. Dadurch, daß der Transistor 38 warm ist, beginnt er bereits bei Anliegen einer Spannung zwischen Basis und Emitter von etwa 0,5 V langsam leitend zu werden. Dadurch wird zwar der Transistor 37 angesteuert, eine sofortige thyristorartige Einschaltung der beiden Transistoren 37, 38 erfolgt jedoch noch nicht, da ein Teil des nun fließenden Stroms über den Widerstand 36 am Transistor 37 vorbeigeleitet wird. Die Schutzschaltung führt somit einen Teil des normalen Ladestroms des Kondensators 22 ab. Dies bewirkt eine Verringerung der Ladegeschwindigkeit und eine damit verbundene Herabsetzung der Triggerfrequenz. Die Lampen werden dunkler.

Eine vollkommene Abschaltung des Wechselrichters erfolgt erst nachdem der Transistor 37 ganz durchgeschaltet hat, also in der Sättigung ist. An dieser Stelle soll darauf hingewiesen werden, daß auch dieser Vorgang aus den für den Überspannungsfall beschriebenen Gründen nur während einer positiven Halbwelle erfolgt.

Eine Voraussetzung zur Erzielung dieser einem Dimmer vergleichbaren Reaktionsweise der Schutzschaltung liegt in der optimalen Abstimmung der Widerstände 31, 32, 33, 45 aufeinander, so daß die Transistoren 37, 38 nicht wie bei der Überlast-Messung schlagartig durchschalten.

Aufgrund der unterschiedlichen Reaktionen der Schutzschaltung F erkennt der Benutzer, ob ein Überspannungsfehler oder ein Übertemperaturfehler vorliegt. Im ersten Fall schaltet die Schutzschaltung die Lampen aus, im zweiten Fall verringert die Schutzschaltung die an die Lampen abgegebene Leistung, wodurch die Lampen lediglich etwas dunkler werden.

Bei der Einstellung der Ansprechgrenzen der beiden Messungen, sorgen die Dioden 41, 42 dafür, daß eine exakte Trennung zwischen dem Fehlerfall "Überlast" und dem Fehlerfall "Übertemperatur" möglich ist. Aufgrund der exakteren Einstellung und der daraus resultierenden präziseren Fehlererkennung können die Anforderungen an die Transistoren 10,11 des Wechselrichters verringert werden, d.h. es können weniger leistungsstarke und damit billigere Transistoren verwendet werden.

## Patentansprüche

1. Elektronischer Transformator zur Wechselstromversorgung einer Last, insbesondere zum Betreiben einer Niedervolt-Lampe, umfassend:
einen an eine Wechselstromquelle, vorzugsweise an das Wechselstromnetz anzuschließenden Gleichrichter (A),
einen dem Gleichrichter nachgeschalteten selbstschwingenden Wechselrichter (B) mit zwei alternierend gesteuerten Schaltelementen (10,11), die über je eine Sekundärwicklung (14, 16) eines Rückkopplungsübertragers (C) angesteuert werden, dessen Primärwicklung (15) im Lastkreis des Wechselrichters liegt,
eine Überwachungsschaltung (E), welche bei Uberlast und/oder Übertemperatur ein Fehlersignal abgibt, und
eine von der Überwachungsschaltung gesteuerte Schutzschaltung (F), welche auf den Wechselrichter einwirkt, wenn sie von der Überwachungsschaltung ein Fehlersignal erhält,
**dadurch gekennzeichnet,**
daß die Überwachungsschaltung (E) die über einer weiteren Sekundärwicklung (46) des Rückkopplungsübertragers abfallenden Spannung oder den durch die weitere Sekundärwicklung (46) des Rückkopplungsübertragers fließenden Strom zur Erzeugung des Fehlersignals auswertet.

2. Elektronischer Transformator nach Anspruch 1, dadurch gekennzeichnet, daß die Überwachungsschaltung (E) so ausgebildet ist, daß sie
(a) bei Übertemperatur ein Fehlersignal abgibt, das die Schutzschaltung (F) dazu veranlaßt, die an die Niedervolt-Lampen abgegebene Leistung zu verringern, und
(b) bei Überlast ein Fehlersignal abgibt, das die Schutzschaltung (F) dazu veranlaßt, die Niedervolt-Lampen abzuschalten.

3. Elektronischer Transformator zur Wechselstromversorgung einer Last, insbesondere zum Betrieben einer Niedervolt-Lampe, umfassend:
einen an eine Wechselstromquelle, vorzugsweise an das Wechselstromnetz anzuschließenden Gleichrichter (A),
einen dem Gleichrichter nachgeschalteten selbstschwingenden Wechselrichter (B) mit zwei alternierend gesteuerten Schaltelementen (10, 11), die über je eine Sekundärwicklung (14, 16) eines Rückkopplungsübertragers angesteuert werden, dessen Primärwicklung (15) im Lastkreis des Wechselrichters liegt,
eine Überwachungsschaltung (E), welche bei Überlast und Übertemperatur ein Fehlersignal ausgibt, und
eine von der Überwachungsschaltung gesteuerte Schutzschaltung (F), welche auf den Wechselrichter einwirkt, wenn sie von der Überwachungsschaltung ein Fehlersignal erhält,
**dadurch gekennzeichnet,**
daß die Überwachungsschaltung (E) bei Übertemperatur ein erstes Fehlersignal und davon unabhängig bei Überlast ein zweites Fehlersignal ausgibt, und
daß die Schutzschaltung (F) bei Erhalt des ersten Fehlersignals von der Überwachungsschaltung die an die Last abgegebene Leistung verringert und bei Erhalt des zweiten Fehlersignals von der Überwachungsschaltung die Last abschaltet.

4. Elektronischer Transformator nach Anspruch 1, 2 oder 3, dadurch gekennzeichnet, daß die Überwachungsschaltung (E) zwei Zweige enthält, von denen einer ein temperaturabhängiges Element (33) und der andere ein Überlastschutzelement (35) enthält, wobei die beiden Zweige durch jeweils eine Diode (41, 42) voneinander entkoppelt sind.

5. Elektronischer Transformator nach Anspruch 4, dadurch gekennzeichnet,
daß das temperaturabhängige Element eine Reihenschaltung aus einem NTC-Widerstand (33) und einem Widerstand (31) ist, die zwischen den beiden Eingangsanschlüssen der Überwachungsschaltung liegt, wobei die an dem Widerstand (31) abfallende Spannung über einen Widerstand und eine der beiden Entkoppelungsdioden (41) als Temperatur-Meßsignal zum Ausgangsanschluß geführt ist, und
daß das Überlastschutzelement eine Zenerdiode (35) ist, wobei deren Kathode an dem mit der Sekundärwicklung (46) verbundenen Eingangsanschluß der Überwachungsschaltung liegt und deren Anode über einen Widerstand (34) und die andere der beiden Entkoppelungsdioden (42) mit dem Ausgangsanschluß der Überwachungsschaltung verbunden ist.

6. Elektronischer Transformator nach Anspruch 5, dadurch gekennzeichnet, daß der NTC-Widerstand (33) mit den Transistoren (10, 11) des Wechselrichters thermisch gekoppelt ist.

7. Elektronischer Transformator nach einem der vorhergehenden Ansprüche, dadurch gekennzeichnet, daß die Schaltelemente (10, 11) bipolare Transistoren sind, wobei einer dieser Transistoren (11) über ein Triggerelement (21) angesteuert wird, das von von einem über den Gleichrichter (A) mit Netzhalbwellen versorgten Kondensator (22) gespeist wird, und daß die Schutzschaltung (F) parallel zu dem Kondensator (22) angeordnet ist.

8. Elektronischer Transformator nach einem der Ansprüche 1-7, dadurch gekennzeichnet, daß die Schutzschaltung den zwischen ihren beiden Anschlüssen liegenden Widerstand abhängig von dem zugeführten Fehlersignal steuert, wobei bei Überlast der Widerstand null und bei Übertemperatur der Widerstand größer null ist.

9. Elektronischer Transformator nach Anspruch 8, dadurch gekennzeichnet,
daß die Schutzschaltung (F) eine Reihenschaltung aus zwei komplementären Transistoren (37, 38) umfaßt, wobei der Emitter des ersten Transistors (37) an einem Anschluß der Schutzschaltung liegt, der Kollektor des ersten Transistors mit der Basis des zweiten Transistors (38) verbunden ist, die Basis des ersten Transistors (37) mit dem Kollektor des zweiten Transistors (38) verbunden ist und der Emitter des zweiten Transistors (38) am anderen Anschluß der Schutzschaltung liegt, und
daß die Basis des zweiten Transistors (38) mit dem Fehlersignal der Überwachungsschaltung (E) beaufschlagt ist.

10. Elektronischer Transformator nach Anspruch 9, dadurch gekennzeichnet, daß zwischen Basis und Emitter des ersten Transistors (37) ein Widerstand (36) liegt, daß zwischen Basis des zweiten Transistors (38) und Anschluß der Schutzschaltung sowie zwischen Emitter des zweiten Transistors (38) und dem anderen Anschluß der Schutzschaltung jeweils ein Widerstand zur Einstellung des Arbeitspunkts dazwischen geschaltet ist.

11. Elektronischer Transformator nach Anspruch 7, dadurch gekennzeichnet, daß das Triggerelement (21) ein Diac ist.

## Claims

1. Electronic transformer for supplying alternating current to a load, in particular for operating a low-voltage lamp, comprising:
a rectifier (A) to be connected to an alternating-current source, preferably to the alternating-current mains,
a self-oscillating inverter (B) which is connected downstream of the rectifier and has two alternately controlled switching elements (10, 11) which are triggered via one secondary winding (14, 16) in each case of a feedback transformer (C) whose primary winding (15) is in the load circuit of the inverter,
a monitoring circuit (E) which emits a fault signal in the event of overload and/or excess temperature, and
a protective circuit (F) which is controlled by the monitoring circuit and which acts on the inverter if it receives a fault signal from the monitoring circuit,
characterized
in that the monitoring circuit (E) evaluates the voltage dropped across a further secondary winding (46) of the feedback transformer or the current flowing through the further secondary winding (46) of the feedback transformer in order to generate the fault signal.

2. Electronic transformer according to Claim 1, characterized in that the monitoring circuit (E) is so designed that,
(a) in the event of excess temperature, it emits a fault signal which causes the protective circuit (F) to reduce the power delivered to the low-voltage lamps, and
(b) in the event of overload, it emits a fault signal which causes the protective circuit (F) to switch off the low-voltage lamps.

3. Electronic transformer for supplying alternating current to a load, in particular for operating a low-voltage lamp, comprising:
a rectifier (A) to be connected to an alternating-current source, preferably to the alternating-current mains,
a self-oscillating inverter (B) which is connected downstream of the rectifier and has two alternately controlled switching elements (10, 11) which are triggered via one secondary winding (14, 16) in each case of a feedback transformer whose primary winding (15) is in the load circuit of the inverter,
a monitoring circuit (E) which emits a fault signal in the event of overload and excess temperature, and
a protective circuit (F) which is controlled by the monitoring circuit and which acts on the inverter if it receives a fault signal from the monitoring circuit,
characterized
in that, in the event of excess temperature, the monitoring circuit (E) emits a first fault signal and, independently thereof, a second fault signal in the event of overload, and
in that, on receiving the first fault signal from the monitoring circuit, the protective circuit (F) reduces the power delivered to the load and, on receiving the second fault signal from the monitoring circuit, it switches off the load.

4. Electronic transformer according to Claim 1, 2 or 3, characterized in that the monitoring circuit (E) contains two branches, one of which contains a temperature-dependent element (33) and the other an overload-protection element (35), the two branches being decoupled from one another by one diode (41, 42) in each case.

5. Electronic transformer according to Claim 4,
characterized
in that the temperature-dependent element is a series connection which comprises an NTC resistor (33) and a resistor (31) and which is situated between the two input terminals of the monitoring circuit, the voltage dropped across the resistor (31) being fed to the output terminal via a resistor and one of the two decoupling diodes (41) as a temperature measurement signal, and
in that the overload protection element is a Zener diode (35), its cathode being situated at that input terminal of the monitoring circuit which is connected to the secondary winding (46) and its anode being connected via a resistor (34) and the other of the two decoupling diodes (42) to the output terminal of the monitoring circuit.

6. Electronic transformer according to Claim 5, characterized in that the NTC resistor (33) is thermally coupled to the transistors (10, 11) of the inverter.

7. Electronic transformer according to one of the preceding claims, characterized in that the switching elements (10, 11) are bipolar transistors, one of said transistors (11) being triggered by a triggering element (21) which is fed by a capacitor (22) supplied with mains half-waves via the rectifier (A), and in that the protective circuit (F) is disposed in parallel with the capacitor (22).

8. Electronic transformer according to one of Claims 1-7, characterized in that the protective circuit controls the resistance situated between its two terminals as a function of the fault signal supplied, the resistance being zero in the event of overload and greater than zero in the event of excess temperature.

9. Electronic transformer according to Claim 8,
characterized
in that the protective circuit (F) comprises a series connection of two complementary transistors (37, 38), the emitter of the first transistor (37) being applied to a terminal of the protective circuit, the collector of the first transistor being connected to the base of the second transistor (38), the base of the first transistor (37) being connected to the collector of the second transistor (38) and the emitter of the second transistor (38) being applied to the other terminal of the protective circuit, and
in that the base of the second transistor (38) is acted on by the fault signal of the monitoring circuit (E).

10. Electronic transformer according to Claim 9,
characterized in that a resistor (36) is situated between the base and emitter of the first transistor (37), and in that there is connected between base of the second transistor (38) and terminal of the protective circuit and also between emitter of the second transistor (38) and the other terminal of the protective circuit one resistor in each case for adjusting the working point between them.

11. Electronic transformer according to Claim 7,
characterized in that the triggering element (21) is a diac.

## Revendications

1. Transformateur électronique pour l'alimentation en courant alternatif d'une charge, notamment pour faire fonctionner une lampe à basse tension comprenant:
un redresseur (A) connecté à une source de courant alternatif, de préférence au réseau à courant alternatif,
un onduleur (B) auto-oscillant intercalé à la suite du redresseur , avec deux éléments de commutation (10, 11) commandés alternativement qui sont amorcés chacun par un enroulement secondaire (14, 16) d'un transformateur de rétroaction (C), dont l'enroulement primaire (15) est placé dans le circuit de charge de l'onduleur,
un circuit de surveillance (E) qui délivre un signal de défaut en cas de surcharge et/ou de surchauffe et
un circuit de protection (F) commandé par le circuit de surveillance, qui agit sur l'onduleur lorsqu'il reçoit un signal de défaut en provenance du circuit de surveillance,
caractérisé par le fait que
le circuit de surveillance (E), pour générer le signal de défaut, exploite la tension qui est abaissée dans un enroulement secondaire (46) supplémentaire du transformateur de rétroaction ou le courant qui circule dans l'enroulement secondaire supplémentaire (46) du transformateur de rétroaction.

2. Transformateur électronique selon la revendication 1, caractérisé par le fait que le circuit de surveillance (E) est conçu de telle sorte a) qu'en cas de surchauffe, il délivre un signal de défaut qui amène le circuit de protection (F) à réduire la puissance délivrée aux lampes à basse tension et b) qu'en cas de surcharge, il délivre un signal de défaut qui amène le circuit de protection (F) à couper les lampes à basse tension.

3. Transformateur électronique pour l'alimentation en courant alternatif d'une charge, notamment pour faire fonctionner une lampe à basse tension comprenant:
un redresseur (A) connecté à une source de courant alternatif, de préférence au réseau à courant alternatif,
un onduleur (B) auto-oscillant intercalé à la suite du redresseur, avec deux éléments de commutation (10, 11) commandés alternativement qui sont amorcés chacun par un enroulement secondaire (14, 16) d'un transformateur de rétroaction (C), dont l'enroulement primaire (15) est placé dans le circuit de charge de l'onduleur,
un circuit de surveillance (E) qui délivre un signal de défaut en cas de surcharge et/ou de surchauffe et
un circuit de protection (F) commandé par le circuit de surveillance, qui agit sur l'onduleur lorsqu'il reçoit un signal de défaut en provenance du circuit de surveillance,
caractérisé par le fait
que le circuit de surveillance (E), en cas de surchauffe, délivre un premier signal de défaut et, en cas de surcharge, délivre un second signal de défaut indépendamment du premier et
que le circuit de protection (F) réduit la puissance fournie à la charge lorsqu'il reçoit le premier signal de défaut délivré par le circuit de surveillance et coupe la charge lorsqu'il reçoit le second signal de défaut délivré par le circuit de surveillance.

4. Transformateur électronique selon revendication 1, 2 ou 3, caractérisé par le fait que le circuit de surveillance (E) comporte deux branches parmi lesquelles une branche contient un élément (33) sensible à la température et l'autre branche contient un élément de protection contre les surcharges (35), les deux branches de circuit étant mutuellement découplées par une diode (41, 42) chaque fois.

5. Transformateur électronique selon la revendication 4, caractérisé par le fait
que l'élément sensible à température est un montage série d'une thermistance CTN (33) et d'une résistance (31), qui est placé entre les deux bornes d'entrée du circuit de surveillance, la tension qui chute dans la résistance (31) étant amenée aux bornes de sortie, en tant que signal de mesure de température, par l'intermédiaire d'une résistance et de l'une des deux diodes de découplage (41) et
que l'élément de protection contre les surcharges est une diode Zener (35), la cathode de celle-ci étant reliée à la borne d'entrée du circuit de surveillance connectée à l'enroulement secondaire (46) et l'anode de celle-ci étant reliée à la borne de sortie du circuit de surveillance par l'intermédiaire d'une résistance (34) et de l'autre des deux diodes de découplage (42).

6. Transformateur électronique selon la revendication 5, caractérisé par le fait que la thermistance CTN (33) est couplée thermiquement aux transistors (10, 11) de l'onduleur.

7. Transformateur électronique selon une des revendications précédentes, caractérisé par le fait que les éléments de commutation (10, 11) sont des transistors bipolaires, l'un de ces transistors (11) étant amorcé par un élément de déclenchement (21) qui est alimenté par un condensateur (22) recevant des demi-ondes du réseau par l'intermédiaire du redresseur (A), et que le circuit de protection (F) est placé en parallèle avec le condensateur (22).

8. Transformateur électronique selon une des revendications 1 à 7, caractérisé par le fait que le circuit de protection commande la résistance placée entre ses deux bornes en fonction du signal de défaut transmis, la résistance étant nulle dans le cas d'une surcharge et supérieure à zéro dans le cas d'une surchauffe.

9. Transformateur électronique selon la revendication 8, caractérisé par le fait
que le circuit de protection (F) comprend un montage série de deux transistors complémentaires (37, 38), l'émetteur du premier transistor (37) étant connecté à une borne du circuit de protection, le collecteur du premier transistor étant relié à la base du second transistor (38), la base du premier transistor (37) étant reliée au collecteur du second transistor (38) et l'émetteur du second transistor (38) étant connectée à l'autre borne du circuit de protection et
que la base du second transistor (38) reçoit le signal de défaut du circuit de surveillance (E).

10. Transformateur électronique selon la revendication 9, caractérisé par le fait qu'une résistance (36) est placée entre la base et l'émetteur du premier transistor (37), qu'entre la base du second transistor (38) et la borne du circuit de protection ainsi qu'entre l'émetteur du second transistor (38) et l'autre borne du circuit de protection est placée chaque fois une résistance pour le réglage du point de fonctionnement.

11. Transformateur électronique selon la revendication 7, caractérisé par le fait que l'élément de déclenchement (21) est un Diac.
